# EUROPEAN PATENT SPECIFICATION

(11) **EP 4 213 112 B1**
(45) Date of publication and mention of the grant of the patent: **03.12.2025**
(21) Application number: 22151445.8
(22) Date of filing: 13.01.2022
(51) Int. Cl.: G06V 20/58, G06V 10/25, G06V 10/56

(54) **METHOD AND DEVICE FOR DETECTING A COLOR OF A TRAFFIC LIGHT IN AN ENVIRONMENT OF A VEHICLE**
VERFAHREN UND VORRICHTUNG ZUR ERKENNUNG DER FARBE EINER VERKEHRSAMPEL IN DER UMGEBUNG EINES FAHRZEUGS
PROCÉDÉ ET DISPOSITIF DE DÉTECTION DE LA COULEUR D'UN FEU DE CIRCULATION DANS L'ENVIRONNEMENT D'UN VÉHICULE

(43) Date of publication of application: 19.07.2023
(73) Proprietor: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(56) References cited:
- US-A1- 2021 027 076
- DIAZ MOISES ET AL: "A Survey on Traffic Light Detection", 21 August 2015, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 201 - 208, ISBN: 978-3-319-10403-4, XP047516756
- SATO I ET AL: "ILLUMINATION FROM SHADOWS", IEEE TRANSACTIONS ON PATTERN ANALYSIS AND MACHINE INTELLIGENCE, IEEE COMPUTER SOCIETY, USA, vol. 25, no. 3, 1 March 2003 (2003-03-01), pages 290 - 300, XP001177783, ISSN: 0162-8828, DOI: 10.1109/TPAMI.2003.1182093

## Description

The present disclosure is directed to a method for detecting a color of a traffic light positioned in an environment of a vehicle, and a data processing unit configured to carry out the method at least partly. An, optionally automated, vehicle comprising the data processing unit may be provided. Additionally or alternatively, a computer program may be provided, wherein the computer program comprises instructions which, when the program is executed by a computer, e.g., the data processing unit, cause the computer to carry out the method at least partly. Additionally or alternatively, a computer-readable (storage) medium may be provided, wherein the computer-readable medium comprises instructions which, when executed by a computer, cause the computer to carry out the method at least partly.

Traffic light detection and especially detection of a color of a traffic light plays a pivotal role in development of driving assistance functions, especially in (highly) automated driving.

WO 2015/136601 A1 is directed to a traffic light detection device which is provided with an imaging unit that acquires a plurality of successive images by repeatedly imaging in a direction of travel of a vehicle, and a traffic light detection unit that detects a traffic light from the image. The traffic light detection unit detects, from the period of brightness change in the plurality of successive images, phase information of an electric power system including the traffic light around the vehicle, and extracts from the image, using the phase information of the electric power system, synchronized pixels of which the brightness changes in synchronism with an alternating-current period of electric power supplied to the traffic light. The traffic light detection device determines from the synchronized pixels whether the traffic light is present.

WO 2016/203616 A1 is directed to a traffic light detection device that acquires color images through an on-board color imaging unit, converts the color images into gray-scale images by associating each of color components of the color images with a gray scale such that the difference in luminance between the red light of the traffic light and the green light of the traffic light falls within a predetermined value, and detects a lighting state of the traffic light from the gray-scale images.

Document US 2021/027076 A1 discloses a traffic signal display estimation system which recognizes, based on the position information of a vehicle and a traffic signal information, a traffic signal included in a camera image, identifies a traffic signal display for each recognized traffic signal and calculates, for each traffic signal, a first evaluation value indicating the certainty of the identified traffic signal display. The system integrates, based on a traffic-signal-to-traffic-signal relational information, a forward traffic signal that is ahead of the travelling direction and that the vehicle should follow and a traffic signal correlated with the forward traffic signal in terms of the traffic signal display, among a plurality of recognized traffic signals. When there is an inconsistency in traffic signal displays identified between a plurality of integrated traffic signals, the system determines a first estimated traffic signal display of the forward traffic signal, based on the first evaluation value for each traffic signal.

One drawback of the prior art is that a color of a traffic light might not be detected with a certain needed level of safety integrity due to light reflected by the traffic light which irritates a sensor of the vehicle.

In the light of this prior art, the object of the present disclosure is to provide a device and/or a method being suitable for overcoming at least the above-mentioned disadvantage of the prior art, respectively.

The object is solved by the features of the independent claim. The dependent claims have preferred further embodiments of the disclosure as their subject matter.

More specifically, the object is solved by a method for detecting a color of a traffic light being positioned in an environment of a vehicle. In other words, a method for determining a lighting state of a traffic light is provided.

The method comprises determining a traffic light area in which the traffic light is located based on sensor data captured by a camera installed at the vehicle and determining a location of a focus area for measuring the color of the traffic light located inside the determined traffic light area based on the sensor data captured by the camera installed at the vehicle.

The focus area is located at least partly in a sub area of the determined traffic light area which is not directly illuminated by an external light source.

Traffic lights, traffic signals, stoplights or robots are signaling devices positioned inter alia at road intersections, pedestrian crossings, and other locations to control flows of traffic.

Here a method is provided for reliable detecting the current or actual color of the traffic light.

Traffic lights are internationally standardized by the Vienna Convention on Road Signs and Signals. Traffic lights alternate the right of way accorded to users with a sequence of illuminating lamps or light emitting diodes (LEDs) of three standard colors, i.e., red, amber, and green.

Red light: Prohibits any traffic from proceeding. A flashing red indication requires traffic to stop and then proceed when safe (equivalent to a stop sign).

Amber light (also known as orange light or yellow light): Warns that the signal is about to change to red, with some jurisdictions requiring drivers to stop if it is safe to do so, and others allowing drivers to go through the intersection if safe to do so. In some European countries (such as the UK), red and amber is displayed together, indicating that the signal is about to change to green. A flashing amber indication is a warning signal. In the United Kingdom and Ireland, a flashing amber light is used only at pelican crossings, in place of the combined red-amber signal, and indicates that drivers may pass if no pedestrians are on the crossing. The length of time that a traffic light remains green or red is known as a phase.

Green light: Allows traffic to proceed in the direction denoted, if it is safe to do so and there is room on the other side of the intersection.

In the United States, traffic signals will go into a flashing mode if the conflict monitor detects a problem, such as a fault that tries to display green lights to conflicting traffic. The signal may display flashing amber to the main road and flashing red to the side road, or flashing red in all directions. Flashing operation can also be used during times of day when traffic is light, such as late at night.

The present disclosure may be used to automatically detect the color(s) displayed by the traffic light when the vehicle approaches the traffic light, i.e., when the traffic light is in the environment of the vehicle.

The environment of the vehicle may be a certain/predefined area around, preferably in a main driving direction in front of, the vehicle. The traffic light area may be a part of the camera data corresponding to an area in the environment of the vehicle where the traffic light is located. The traffic light area may be detected in the camera data using an objection detection algorithm. Outer boundaries of the traffic light area may be defined by a bounding box being located around the detected traffic light.

The method determines, e.g., measures, the color of the traffic light in area not directly subjected to light emitted by an external light source, e.g., the sun. Therefore, a glare of the camera of the vehicle which may make it impossible to determine the color of the traffic light may be avoided. Glare refers to an optical or visual disturbance triggered by excessive brightness, which leads to overstraining of the visual system. Glare is commonly represented as "white", since increasing luminous intensity in the model of additive color mixing, which is relevant for the perception or measurement of light, results in the color impression white - and also appears white on the positive of photographic images. However, glare can also be caused by monochromatic light and be perceived as colored. More specifically, if too many photons hit a receptor (here the camera) in too short a time, the receptor becomes oversaturated. The light input is for example measured as brightness per unit area multiplied by time. This can be used to represent the illuminance (in Im/m²) of point-shaped light sources or the luminance (in cd/m²) of two-dimensional sources as the sum of the areas of point-shaped sources. Here, the supersaturation normally occurs only in a small area in the field of view of the camera, i.e., so called local glare, where the light of the external light source directly hits the traffic light and is reflected by the traffic light to hit the camera. Local glare is usually caused by differences in the luminance of the surrounding area (relative brightness). By avoiding these areas with the local glare for measuring the color of the traffic light, the color may be determined with an increased reliability.

Directly illuminated may mean that the light hitting the traffic light is not reflected by other objects before hitting the traffic light. This area subjected to direct light or direct radiation is avoided by the method for determining the color of the traffic light. Direct radiation may refer to that portion of electromagnetic radiation emitted from a radiation source (e.g., the sun) that propagates without encountering an obstacle and therefore travels the shortest possible path between the point of its emission and the point at which it is reflected, absorbed, scattered, diffracted, or refracted (here the traffic light).

In the following, preferred implementations of the method are described in detail.

The method may comprise determining a location of the external light source based on the sensor data captured by the camera installed at the vehicle, determining the sub area of the determined traffic light area which is not directly illuminated by the external light source based on the determined location of the external light source, and determining the location of the focus area based on the determined sub area.

That is, by determining the location of the (predefined) external light source and for example by assuming a predefined optical path of the light emitted by the external light source as well as knowing the location of the traffic light, the area directly illuminated by the external light source may be determined.

The term camera as used herein may be understood as camera system and thus may refer to a plurality of cameras installed at the vehicle.

Determining the location of the external light source may comprise determining an area of a shadow of the traffic light resulting from light emitted by the external light source based on the sensor data captured by the camera installed at the vehicle.

The shadow may be defined as a dark area where light from the external light source is blocked by the traffic light. The shadow may occupy all of the three-dimensional volume behind the traffic light with the external light source in front of it. The cross section of the shadow is a two-dimensional silhouette, or a reverse projection of the traffic light blocking the light emitted by the external light source. The location of the shadow depends on the location of the external light source, e.g., the sun (wherein the sun is to be assumed as "infinitely far away" from the traffic light). Knowing the form of the shadow, the position (i.e, the location) of the external light source causing the shadow may be determined.

The method may comprise determining a brightness distribution in the traffic light area based on the sensor data captured by the camera installed at the vehicle, determining the sub area of the determined traffic light area which is not directly illuminated by the external light source based on the determined brightness distribution, and determining the location of the focus area based on the determined sub area.

As explained above, if too many photons hit a receptor in too short a time, the receptor becomes oversaturated. The light input is measured as brightness per unit area times time duration. This can be used to represent the illuminance (in Im/m²) of point-shaped light sources or the luminance (in cd/m²) of two-dimensional sources as the sum of the areas of point-shaped sources. When the oversaturation occurs only in a small area, here the directly illuminated sub area, one speaks of local glare. By determining the brightness distribution in the traffic light area of the sensor data, e.g., in the area where the bounding box is located, and comparing the determined brightness (for example for each pixel) to a predefined threshold thereby filtering out parts (e.g., pixels) of the sensor data exceeding the threshold, may allow to avoid a color measurement in areas of local glare.

The method may comprise determining a first color of the focus area using an algorithm being based on artificial intelligence, determining a second color of the focus area using a deterministic algorithm, comparing the first and the second color to each other, and determining the color of the traffic light based on the first and the second color of the focus area, if a result of the comparison is that the first and the second color are matching.

This allows for double checking of the determined color thereby increasing the safety integrity of the method.

The method may comprise detecting a first traffic light position in the environment of the vehicle based on the captured sensor data, detecting a second traffic light position in the environment of the vehicle based on map data, and determining a plausibility of the traffic light area by comparing the first traffic light position and the second traffic light position to each other.

In other words, map data and sensor data are used to detect a location/position of the traffic light, respectively, and these two determined positions are compared to each other. The traffic light area is determined to be valid (i.e., has a certain/predefined safety integrity level) if a result of the comparison is that the two determined traffic light positions are matching.

This allows for double checking of the determined traffic light area thereby increasing the safety integrity of the method.

Safety integrity may be defined using the Automotive Safety Integrity Level (ASIL) which is a standardized risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements. There are four ASILs identified by the standard: ASIL A, ASIL B, ASIL C, ASIL D. ASIL D dictates the highest integrity requirements on the device/method and ASIL A the lowest. Hazards that are identified as QM do not dictate any safety requirements.

The above-described method may be summarized in other words and with respect to a more concrete implementation thereof as follows.

Detection of traffic light and its respective color red, yellow/amber and green are difficult to carry out with a certain safety integrity level such as ASIL B. The method may present an idea of using multiple perception sensors, such as a camera, a radar sensor and/or a LiDAR sensor, optionally together with map data and a location sensor (e.g., a GPS sensor), to ensure that a correct geometrical location of a traffic light may be detected.

More specifically, in a first step the traffic light location detected by one, some or all of the perception sensors may be compared to the traffic light location found in (optionally high definition(HD)) map data. For example, only if the location matches, i.e., the location of the traffic light determined using he perception sensor(s) is found in the map data, then the method goes to the next step.

In a second step, two different algorithms may be used in different context to detect the color of the traffic lights, i.e., the color currently displayed by the traffic light and/or included in the sensor data of the perception sensor. Here, different samples of the sensor data may be taken in such a way that a part of the traffic light illuminated with an external light source is avoided. Here, the samples may be taken based on principle of focus areas at that part of the traffic light which are not reflecting light emitted by the external light source. The samples may be provided as raw data to two parallel algorithms. The first algorithm may be based on artificial intelligence/machine learning being configured (optionally trained) to detect the color of traffic light (e.g., based on standard libraries created by (optionally training) data collection). The second algorithm may be working in parallel to the first algorithm and may take the same raw data as input to detect the color of traffic light.

A validator may be provided which is configured to validate the color detected/determined from the two different algorithms, respectively. If the validator (algorithm) detects a correct match, e.g., for all three possible colors of the traffic light in the three different subgroups of the traffic light, i.e., red on or off, yellow on or off and green on or off, then it will send a valid output. The validation may ensure that the color detected by the two algorithms has sufficient confidence to ensure that detection is correct. In case of mismatch, the validator may send an error message to ensure that the detection has ASIL safety integrity.

Furthermore, a data processing unit is provided. The data processing unit is configured to carry out the above-described method at least partly.

The data processing unit can comprise or be an electronic control unit (ECU) for a vehicle. The electronic control unit can be an intelligent processor-controlled unit that can communicate with other modules, optionally via a central gateway (CGW). The control unit can form part of the vehicle's onboard network via fieldbuses such as the CAN bus, LIN bus, MOST bus and/or FlexRay or via automotive Ethernet, optionally together with a telematics control unit. The electronic control unit may be configured to control functions relevant to a driving behavior of the vehicle, such as an engine control system, a power transmission, a braking system and/or a tire pressure control system. In addition, some or all driver assistance systems such as parking assistant, adaptive cruise control, lane departure warning, lane change assistant, traffic sign recognition, light signal recognition, approach assistant, night vision assistant, intersection assistant, and/or many others may be controlled by the control unit.

Moreover, the description given above with respect to the method applies mutatis mutandis to the control unit and vice versa.

Furthermore, a vehicle is provided. The vehicle comprises the above-described data processing unit and a camera connected to the data processing unit.

The vehicle may be an automobile, e.g., a car. The vehicle may be automated. The automated vehicle can be designed to take over lateral and/or longitudinal guidance at least partially and/or temporarily during automated driving of the automated vehicle. Therefore, inter alia the sensor/camera data of the above-described sensor system/camera may be used. The control unit may be configured to control the automated driving at least partly.

The automated driving may be such that the driving of the vehicle is (largely) autonomous. The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The vehicle autonomously performs functions such as triggering the turn signal, changing lanes, and/or lane keeping. The driver can attend to other matters, but is prompted by the system to take over control within a warning time if needed.

The vehicle may be an autonomy level 4 vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

Moreover, the description given above with respect to the method and the control unit applies mutatis mutandis to the vehicle and vice versa.

Furthermore, a computer program comprising instructions which, when the program is executed by a computer, optionally the control unit, cause the computer to carry out the above-described method at least partly.

The program may comprise any program code, in particular a code suitable for control systems of vehicles. The description given above with respect to the method, the control unit and the vehicle applies mutatis mutandis to the computer program and vice versa.

Furthermore, a computer-readable medium comprising instructions which, when executed by a computer, cause the computer to carry out the above-described method at least partly.

The computer-readable medium may be any digital data storage device, such as a USB flash drive, a hard disk, a CD-ROM, an SD card or an SSD card. The above-described computer program may be stored on the computer-readable medium. However, the computer program does not necessarily have to be stored on such a computer-readable medium, but can also be obtained via the Internet.

Moreover, the description given above with respect to the method, the control unit, the vehicle, and the computer program applies mutatis mutandis to the computer-readable (storage) medium and vice versa.

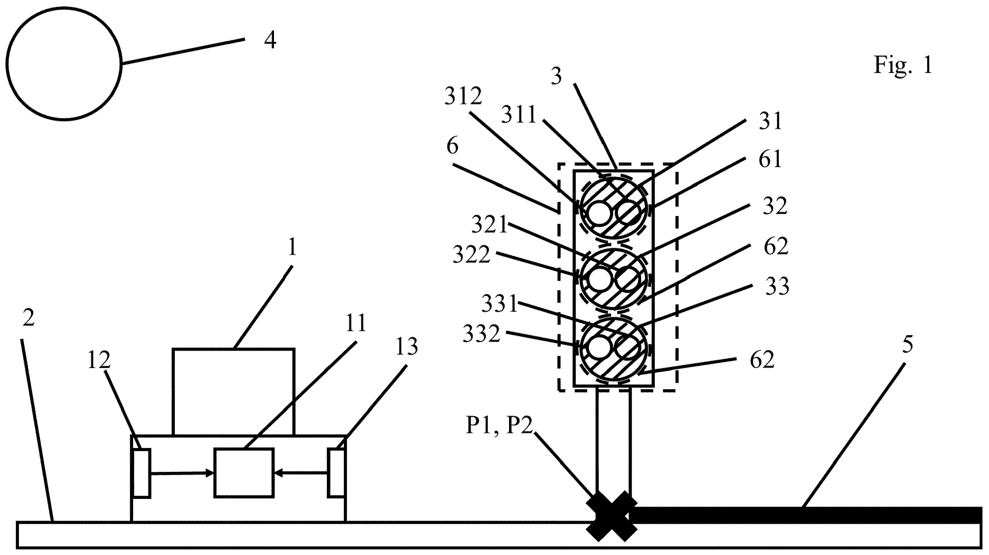

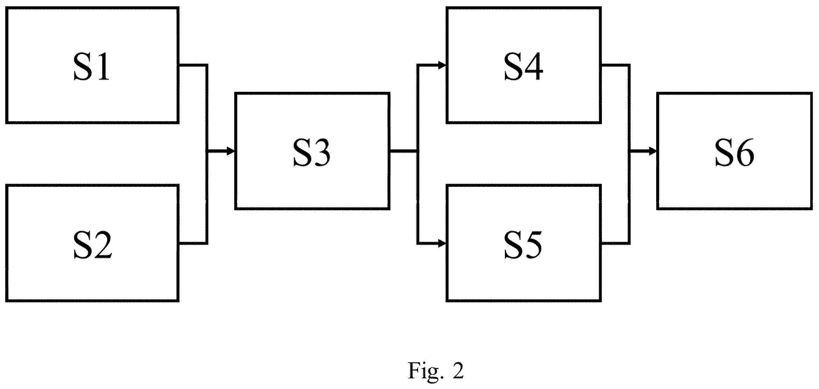

An embodiment is described with reference to figures 1 and 2 below.
Fig. 1 shows schematically a vehicle with a data processing unit which is configured to carry out a method for detecting a color of a traffic light being positioned in an environment of a vehicle, and
Fig. 2 shows a flowchart of the method for detecting the color of the traffic light.

In the following an embodiment is described with reference to figures 1 and 2, wherein the same reference signs are used for the same objects throughout the description of the figures and wherein the embodiment is just one specific example for implementing the disclosure and does not limit the scope of the disclosure as defined by the claims.

In figure 1 a vehicle (here a car) 1 is shown on a road 2, wherein the vehicle 1 comprises a data processing unit 11 and a sensor system with a rear-view camera 12 and a front-view camera 13 both connected to the data processing unit 11. On the road 2 in front of the vehicle 1 in a field of view of the front-view camera 13 a traffic light 3 is positioned, wherein the traffic light 3 is illuminated by an external light source (here the sun) 4 being positioned behind the vehicle 1 (i.e., the vehicle 1 is positioned between the external light source 4 and the traffic light 3) in a field of view of the rear-view camera 12. The traffic light 3 comprises three light sources 31 -33, wherein a first one of the light sources 31 is configured to display/emit a red light, the second one of the light sources 32 is configured to display an orange light and a third one of the light sources 33 is configured to display a green light. The external light source 4 illuminates the traffic light 3 such that a shadow 5 behind (with respect to the vehicle 1) the traffic light 3 results.

The cameras 12, 13 of the sensor system capture images of the environment of the vehicle 1 including the traffic light 3 and the external light source 4, and provide the captured images as sensor data to the data processing unit 1.

The data processing unit 11 shown in figure 1 is configured to carry out a method for detecting a color displayed by the traffic light 3 located in the environment of the vehicle 1, wherein the method comprises substantially six steps as shown in figure 2 which depicts a flowchart of the method. Therefore, the data processing unit 11 uses the sensor data to determine the color currently displayed by the traffic light 3, i.e., to determine which one of the three light sources 31- 33 is turned on.

At first, a traffic light area 6 in which the traffic light 3 is located is determined based on the sensor data captured by the front-view camera 13 installed at the vehicle 1 and is validated using map data and the sensor data. This is done in the first three steps S1 - S3 of the method.

More specifically, in the first step S1 of the method the traffic light area 6 is detected in the environment of the vehicle 1 based on the sensor data captured by the front-view camera 13. That is, using the images captured by the front-view camera 13 and an object detection algorithm, the data processing unit 1 determines a bounding box 6 accommodating the three light sources 31 - 33 of the traffic light 3 and/or determines a bounding box 61 - 63 for each one of the light sources 31 - 33, respectively. Moreover, the algorithm determines a location of the detected traffic light 3, e.g., with respect/relative to the vehicle 1, the so called first traffic light position P1 based on the sensor data.

In a second step of the method S2, a second traffic light position P2 is determined, optionally by another or the same algorithm used in the first step S1, wherein the second traffic light position P2 is determined based on map data, optionally stored in the vehicle 1, and GPS (sensor) data allowing to determine a current position of the vehicle 1 with respect to the map data and to determine at which position in the environment of the vehicle 1 the traffic light 3 is located.

Then, in the third step S3 of the method, a plausibility check for checking the plausibility of the determined traffic light area 6 is carried out by comparing the first traffic light position P1 and the second traffic light position P2 to each other. That is, the second traffic light position P2 is compared to the first traffic light position P1 in the third step S3 of the method. The first position P1 of the traffic light 3 determined using the sensor data as explained above with respect to the first step S1 and thus the determined traffic light area 6 is considered to be plausible if the two positions P1, P2 match (e.g., a difference between the two positions P1, P2 is within a certain tolerance area). Otherwise, the method may stop and/or raise an error flag. The same applies mutatis mutandis for the bounding boxes 61 - 63 determined for each one of the light sources 31 - 33, respectively.

Afterwards at least one location/position of a focus area 311 - 331 for measuring the color of the traffic light 3 located inside the determined traffic light area 6 is determined. More specifically, in a fourth step S4 of the method at least one position and size of the focus areas 311 - 331 is determined per bounding box 61 - 63 of the respective light source 31 - 33 based on the sensor data captured by the front-view camera 13 installed at the vehicle 1. Then the color is measured in each one of the determined focus areas 311 - 331. The size and the position of the focus areas 311 - 331 is determined such that the focus areas 311 - 331 are located at least partly in a sub area of the determined traffic light area 6 which is not directly illuminated by the external light source 4 (area hatched in figure 1). Therefore, a sub area 312 - 332 per bounding box 61 - 63 of the light sources 31 -33 is determined which is directly illuminated by the external light source 4 and the focus area 311- 331 for measuring the color of light emitted by the respective light source 31 - 33 is placed outside the sub areas 312 - 332 but inside the respective bounding box 31 - 33. The respective sub area 312 - 332 directly illuminated by the external light source 4 is determined based on a location of the external light source 4 determined based on the sensor data captured by the rear-view camera 12, wherein a position of the shadow 5 is determined using the sensor data of the front-view camera 13 and is considered in determining the location of the external light source 4. Additionally or alternatively, the respective sub area 312 - 332 directly illuminated by the external light source 4 is determined using a brightness distribution determined based on the sensor data captured by the front-view camera 13, wherein the brightness distribution is determined for each one of the bounding boxes 61 - 63 of the respective light source 31 - 33. Then, the color of the light emitted by the respective light source 31 - 33 is determined using a part of the sensor data of the front-view camera 13 corresponding to the respective focus areas 311 -331. The fourth step S4 is carried out at least partly by an algorithm being based on artificial intelligence. Moreover, the actions described above with respect to the fourth step S4 are also carried out in parallel at least partly by a deterministic algorithm, i.e., without using artificial intelligence, in a fifth step S5 of the method. Therefore, a first color (determined using artificial intelligence) and a second color (determined without using artificial intelligence) are determined for each one of the light sources 31 - 33 in the fourth and the fifth step S4, S5 of the method. In a sixth step S6 of the method, the first and the second colors are compared to each other analogously to the third step S3 of the method, and the color of the traffic light 3 is determined based on the first and the second colors of the focus areas 311 - 331 and is validated if a result of the comparison is that the first and the second colors are matching (e.g., the first and the second color of the first light source 31 are red and the first and the second color of the second and third light source 32, 33 are not yellow and not green, then the color of the traffic light 3 is determined to be red).

### Reference signs

- 1: vehicle
- 11: data processing unit
- 12: rear-view camera
- 13: front-view camera
- 2: road
- 3: traffic light
- 31 - 33: light source
- 311- 331: focus area
- 312 - 332: sub area directly illuminated by external light source
- 4: external light source
- 5: shadow
- 6: traffic light area/bounding box
- 61 - 63: bounding box of light source/light source area
- P1- P2: position of the traffic light
- S1 - S6: steps of the method

## Claims

1. Method for detecting a color of a traffic light (3) being positioned in an environment of a vehicle (1), wherein the method comprises:
determining a traffic light area (6) in which the traffic light (3) is located based on sensor data captured by a camera (13) installed at the vehicle (1),
determining, for each light source (31 - 33) of the traffic light (3), a bounding box (61 - 63) within the traffic light area (6),
detecting a first traffic light position (P1) in the environment of the vehicle (1) based on the captured sensor data,
detecting a second traffic light position (P2) in the environment of the vehicle (1) based on map data,
determining a plausibility of the traffic light area (6) by comparing the first traffic light position (P1) and the second traffic light position (P2) to each other,
determining, for each bounding box (61 - 63), a location of a respective focus area (311 - 331) for measuring the color of the respective light source (31 - 33) based on the sensor data captured by the camera (13) installed at the vehicle (1), each focus area (311 - 331) being located at least partly in a sub area of the respective bounding box (61 - 63) which is not directly illuminated by an external light source (4), wherein the determining the location of each focus area (311 - 331) includes:
determining, within each bounding box (61 - 63), a brightness distribution based on the sensor data, and
determining each sub area which is not directly illuminated by the external light source (4) based on the brightness distribution,
determining a first color of each focus area (311 - 331) using an algorithm being based on artificial intelligence,
determining a second color of each focus area (311 - 331) using a deterministic algorithm,
comparing the first color and the second color with each other, and
determining the color of the traffic light (3) based on the first and the second color of each focus area (311 - 331), if a result of the comparison indicates that the first and the second color are matching.

2. Method according to claim 1, wherein the method further comprises:
- determining a location of the external light source (4) based on the sensor data captured by the camera (12, 13) installed at the vehicle (1),
- determining the sub area of the determined traffic light area (6) which is not directly illuminated by the external light source (4) based on the determined location of the external light source (4), and
- determining the location of the focus area (311 - 331) based on the determined sub area.

3. Method according to claim 2, wherein the determining the location of the external light source (4) comprises determining an area of a shadow (5) of the traffic light (3) resulting from light emitted by the external light source (4) based on the sensor data captured by the camera (13) installed at the vehicle (1).

4. Data processing unit (11), **characterized in that** the data processing unit is (11) configured to carry out the method according to any of claims 1 to 3.

5. Vehicle (1), **characterized in that** the vehicle (1) comprises the data processing unit (11) according to claim 4 and a camera (12, 13) connected to the data processing unit (11).

6. A computer program comprising instructions which, when the program is executed by a computer, cause the computer to carry out the method according to any of claims 1 to 3.

7. A computer-readable medium comprising instructions which, when executed by a computer, cause the computer to carry out the method according to any of claims 1 to 3.

## Patentansprüche

1. Verfahren zum Erkennen einer Farbe einer Ampel (3), die in einer Umgebung eines Fahrzeugs (1) positioniert ist, wobei das Verfahren umfasst:
- Bestimmen eines Ampelbereichs (6), in dem sich die Ampel (3) befindet, basierend auf Sensordaten, die von einer am Fahrzeug (1) installierten Kamera (13) erfasst werden,
- Bestimmen, für jede Lichtquelle (31 - 33) der Ampel (3), eines Begrenzungsrahmens (61 - 63) innerhalb des Ampelbereichs (6),
- Erkennen einer ersten Ampelposition (P1) in der Umgebung des Fahrzeugs (1) basierend auf den erfassten Sensordaten,
- Erkennen einer zweiten Ampelposition (P2) in der Umgebung des Fahrzeugs (1) basierend auf Kartendaten,
- Bestimmen einer Plausibilität des Ampelbereichs (6) durch Vergleichen der ersten Ampelposition (P1) und der zweiten Ampelposition (P2) miteinander,
- Bestimmen, für jeden Begrenzungsrahmen (61 - 63), eines Ortes eines jeweiligen Fokusbereichs (311 - 331) zum Messen der Farbe der jeweiligen Lichtquelle (31 - 33) basierend auf den Sensordaten, die von der am Fahrzeug (1) installierten Kamera (13) erfasst werden, wobei sich jeder Fokusbereich (311 - 331) zumindest teilweise in einem Teilbereich des jeweiligen Begrenzungsrahmens (61 - 63) befindet, der nicht direkt von einer externen Lichtquelle (4) beleuchtet wird, wobei das Bestimmen des Ortes jedes Fokusbereichs (311 - 331) umfasst:
- Bestimmen einer Helligkeitsverteilung innerhalb jedes Begrenzungsrahmens (61 - 63) basierend auf den Sensordaten, und
- Bestimmen jedes Teilbereichs, der nicht direkt von der externen Lichtquelle (4) beleuchtet wird, basierend auf der Helligkeitsverteilung,
- Bestimmen einer ersten Farbe jedes Fokusbereichs (311 - 331) unter Verwendung eines auf künstlicher Intelligenz basierenden Algorithmus,
- Bestimmen einer zweiten Farbe jedes Fokusbereichs (311 - 331) unter Verwendung eines deterministischen Algorithmus,
- Vergleichen der ersten Farbe und der zweiten Farbe miteinander, und
- Bestimmen der Farbe der Ampel (3) basierend auf der ersten und der zweiten Farbe jedes Fokusbereichs (311 - 331), wenn ein Ergebnis des Vergleichs anzeigt, dass die erste und die zweite Farbe übereinstimmen.

2. Verfahren nach Anspruch 1, wobei das Verfahren ferner umfasst:
- Bestimmen eines Ortes der externen Lichtquelle (4) basierend auf den Sensordaten, die von der am Fahrzeug (1) installierten Kamera (12, 13) erfasst werden,
- Bestimmen des Teilbereichs des bestimmten Ampelbereichs (6), der nicht direkt von der externen Lichtquelle (4) beleuchtet wird, basierend auf dem bestimmten Ort der externen Lichtquelle (4), und
- Bestimmen des Ortes des Fokusbereichs (311 - 331) basierend auf dem bestimmten Teilbereich.

3. Verfahren nach Anspruch 2, wobei das Bestimmen des Ortes der externen Lichtquelle (4) das Bestimmen eines Bereichs eines Schattens (5) der Ampel (3) umfasst, der aus Licht resultiert, das von der externen Lichtquelle (4) emittiert wird, basierend auf den Sensordaten, die von der am Fahrzeug (1) installierten Kamera (13) erfasst werden.

4. Datenverarbeitungseinheit (11), **dadurch gekennzeichnet, dass** die Datenverarbeitungseinheit (11) konfiguriert ist, das Verfahren nach einem der Ansprüche 1 bis 3 durchzuführen.

5. Fahrzeug (1), **dadurch gekennzeichnet, dass** das Fahrzeug (1) die Datenverarbeitungseinheit (11) nach Anspruch 4 und eine mit der Datenverarbeitungs-einheit (11) verbundene Kamera (12, 13) umfasst.

6. Computerprogramm, umfassend Anweisungen, die, wenn das Programm von einem Computer ausgeführt wird, den Computer veranlassen, das Verfahren nach einem der Ansprüche 1 bis 3 durchzuführen.

7. Computerlesbares Medium, umfassend Anweisungen, die, wenn sie von einem Computer ausgeführt werden, den Computer veranlassen, das Verfahren nach einem der Ansprüche 1 bis 3 durchzuführen.

## Revendications

1. Procédé de détection d'une couleur d'un feu de circulation (3) positionné dans un environnement d'un véhicule (1), le procédé comprenant :
- la détermination d'une zone de feu de circulation (6) dans laquelle le feu de circulation (3) est situé sur la base de données de capteur capturées par une caméra (13) installée sur le véhicule (1),
- la détermination, pour chaque source lumineuse (31 - 33) du feu de circulation (3), d'une boîte englobante (61 - 63) dans la zone de feu de circulation (6),
- la détection d'une première position de feu de circulation (P1) dans l'environnement du véhicule (1) sur la base des données de capteur capturées,
- la détection d'une seconde position de feu de circulation (P2) dans l'environnement du véhicule (1) sur la base de données cartographiques,
- la détermination d'une plausibilité de la zone de feu de circulation (6) en comparant la première position de feu de circulation (P1) et la seconde position de feu de circulation (P2) l'une à l'autre,
- la détermination, pour chaque boîte englobante (61 - 63), d'un emplacement d'une zone de focus respective (311 - 331) pour mesurer la couleur de la source lumineuse respective (31 - 33) sur la base des données de capteur capturées par la caméra (13) installée sur le véhicule (1), chaque zone de focus (311 - 331) étant située au moins partiellement dans une sous-zone de la boîte englobante respective (61 - 63) qui n'est pas directement éclairée par une source lumineuse externe (4), où la détermination de l'emplacement de chaque zone de focus (311 - 331) comprend :
- la détermination, à l'intérieur de chaque boîte englobante (61 - 63), d'une distribution de luminosité basée sur les données de capteur, et
- la détermination de chaque sous-zone qui n'est pas directement éclairée par la source lumineuse externe (4) sur la base de la distribution de luminosité,
- la détermination d'une première couleur de chaque zone de focus (311 - 331) en utilisant un algorithme basé sur l'intelligence artificielle,
- la détermination d'une seconde couleur de chaque zone de focus (311 - 331) en utilisant un algorithme déterministe,
- la comparaison de la première couleur et de la seconde couleur l'une avec l'autre, et
- la détermination de la couleur du feu de circulation (3) sur la base de la première et de la seconde couleur de chaque zone de focus (311 - 331), si un résultat de la comparaison indique que la première et la seconde couleur correspondent.

2. Procédé selon la revendication 1, le procédé comprenant en outre :
- la détermination d'un emplacement de la source lumineuse externe (4) sur la base des données de capteur capturées par la caméra (12, 13) installée sur le véhicule (1),
- la détermination de la sous-zone de la zone de feu de circulation déterminée (6) qui n'est pas directement éclairée par la source lumineuse externe (4) sur la base de l'emplacement déterminé de la source lumineuse externe (4), et
- la détermination de l'emplacement de la zone de focus (311 - 331) sur la base de la sous-zone déterminée.

3. Procédé selon la revendication 2, dans lequel la détermination de l'emplacement de la source lumineuse externe (4) comprend la détermination d'une zone d'une ombre (5) du feu de circulation (3) résultant de la lumière émise par la source lumineuse externe (4) sur la base des données de capteur capturées par la caméra (13) installée sur le véhicule (1).

4. Unité de traitement de données (11), **caractérisée en ce que** l'unité de traitement de données (11) est configurée pour exécuter le procédé selon l'une quelconque des revendications 1 à 3.

5. Véhicule (1), **caractérisé en ce que** le véhicule (1) comprend l'unité de traitement de données (11) selon la revendication 4 et une caméra (12, 13) connectée à l'unité de traitement de données (11).

6. Programme informatique comprenant des instructions qui, lorsque le programme est exécuté par un ordinateur, amènent l'ordinateur à exécuter le procédé selon l'une quelconque des revendications 1 à 3.

7. Support lisible par ordinateur comprenant des instructions qui, lorsqu'elles sont exécutées par un ordinateur, amènent l'ordinateur à exécuter le procédé selon l'une quelconque des revendications 1 à 3.
